# EUROPÄISCHE PATENTSCHRIFT

(11) **EP 3 545 215 B1**
(45) Veröffentlichungstag und Bekanntmachung des Hinweises auf die Patenterteilung: **21.07.2021**
(21) Anmeldenummer: 17787406.2
(22) Anmeldetag: 23.10.2017
(51) Int. Cl.: F16H 63/34

(54) **ELEKTROMECHANISCHE AKTORIK**
ELECTROMECHANICAL ACTUATION SYSTEM
SYSTÈME D'ACTIONNEMENT ÉLECTROMÉCANIQUE

(30) Priorität: 28.11.2016 DE 102016223554
(43) Veröffentlichungstag der Anmeldung: 02.10.2019
(73) Patentinhaber: ZF Friedrichshafen AG, 88046 Friedrichshafen (DE)
(72) Erfinder: PFEIFFER, Daniel, 88276 Berg (DE)
(74) Vertreter: ZF Friedrichshafen AG
(86) Internationale Anmeldenummer: PCT/EP2017/076955
(87) Internationale Veröffentlichungsnummer: WO 2018/095668

(56) Entgegenhaltungen:
- EP-A1- 3 181 956
- EP-A1- 3 181 957
- WO-A1-2017/005407
- DE-A1- 10 046 589
- US-A- 4 817 463

## Beschreibung

Die vorliegende Erfindung betrifft eine elektromechanische Aktorik zum Erreichen bzw. Anfahren von zumindest zwei Schaltpositionen gemäß der im Oberbegriff des Patentanspruches 1 näher definierten Art.

Aus der noch nicht veröffentlichten Anmeldung der Anmelderin mit dem amtlichen Aktenzeichen DE 10 2015 206 156 A1 ist eine Parksperrenanordnung mit einem ersten Leistungspfad zum Freigeben und Sperren eines Parksperrenrades im Regelbetrieb und mit einem zweiten Leistungspfad zum Sperren des Parksperrenrades im Notbetrieb bekannt. Der erste Leistungspfad und der zweite Leistungspfad sind über ein Umlaufrädergetriebe miteinander mechanisch gekoppelt. Im Notbetrieb kann mit der Parksperrenanordnung bei blockiertem ersten Leistungspfad ein Drehmoment auf das Parksperrenrad übertragen werden, so dass das Parksperrenrad eingelegt wird. Demzufolge ist ausschließlich das Einlegen der Parksperre möglich. Beispielsweise im Notbetrieb ist es jedoch erforderlich, dass die Parksperrenanordnung auch bei Bedarf wieder ausgelegt werden kann. Dies ist jedoch bei der vorbeschriebenen Parksperrenanordnung in nachteiliger Weise nicht möglich.

Die US 4,817,463 A offenbart eine elektrische Bremskabel-Spannvorrichtung, die einen Planetengetriebezug umfasst, der von einem motorgetriebenen Schneckengetriebe angetrieben wird. In der DE 100 46 589 A1 ist eine Stellvorrichtung für ein einstellbares Getriebe mit einem Zwischengetriebe zur Übertragung der von einem ersten Stellglied erzeugten Stellbewegung auf ein Wählelement des einstellbaren Getriebes gezeigt, wobei das Zwischengetriebe zusätzlich zu dem ersten Stellglied mit einem zweiten Stellglied verbunden ist, um das Getriebe auch bei einem Ausfall des ersten Stellglieds mindestens teilweise einstellen zu können. Die nachveröffentlichte

EP 3 181 956 A1 offenbart ein Schaltsteuersystem, das einen Ausgangsmechanismus, erste und zweite Antriebselemente und einen Antriebsstrang umfasst. In der nachveröffentlichten

WO 2017/005407 A1 ist ein Parksperrgetriebe zum Betreiben einer Parksperreinheit eines Fahrzeugs offenbart, wobei das Parksperrgetriebe ein Planetengetriebe, eine Hohlradfixierungseinheit, die ausgebildet ist, um in einem ersten Betriebszustand das Hohlrad gegen eine Drehung zu fixieren und in einem zweiten Betriebszustand eine Drehung des Hohlrades freizugeben. Die nachveröffentlichte EP 3 181 957 A1 offenbart ein Schaltsteuerungssystem, das erste und zweite Antriebselemente, einen Antriebsstrang, der selektiv von dem ersten und zweiten Antriebselement angetrieben wird, und einen Halter umfasst. Der Antriebsstrang umfasst einen ersten Eingang, der vom ersten Antriebselement angesteuert wird, einen zweiten Eingang und einen Ausgang, der mit dem ersten Eingang und dem zweiten Eingang gekoppelt und selektiv von diesem angetrieben wird. Das zweite Antriebselement ist mit dem zweiten Eingang gekoppelt, um den Ausgang während eines zweiten Betriebsmodus über den zweiten Eingang anzutreiben, um eine Getriebeschaltung zu bewirken. Der Halter ist selektiv mit dem zweiten Eingang gekoppelt und zwischen der ersten und der zweiten Position beweglich, um eine Bewegung des zweiten Eingangs während des zweiten Betriebsmodus zu ermöglichen und eine solche Bewegung während eines ersten Betriebsmodus zu verhindern.

Der vorliegenden Erfindung liegt die Aufgabe zugrunde eine elektromechanische Aktorik der eingangs beschriebenen Gattung vorzuschlagen, bei der das Erreichen von zumindest zwei Schaltpositionen sowohl im Normalbetrieb als auch im Notbetrieb auf konstruktiv einfachste Weise ermöglicht wird.

Diese Aufgabe wird erfindungsgemäß durch die Merkmale des Patentanspruches 1 gelöst. Weitere vorteilhafte Ausführungen ergeben sich aus den Unteransprüchen und der Beschreibung sowie den Zeichnungen.

Somit wird eine elektromechanische Aktorik, insbesondere für ein Fahrzeug, zum Erreichen von zumindest zwei Schaltpositionen vorgeschlagen. Die Aktorik umfasst zumindest einen elektrischen Antrieb für den Normalbetrieb und zumindest einen Energiespeicher als Antrieb für den Notbetrieb, wobei sowohl der elektrische Antrieb als auch der Energiespeicher mit einem Umlaufrädergetriebe koppelbar bzw. gekoppelt sind. Um eine konstruktiv besonders einfache Möglichkeit anzugeben, bei der sowohl das Erreichen der Schaltpositionen im Normalbetrieb als auch im Notbetrieb realisierbar ist, kann vorgesehen sein, dass das Umlaufrädergetriebe mit einer eine Drehbewegung bzw. rotatorische Bewegung in eine Linearbewegung bzw. Translationsbewegung umwandelnden Übertragungsvorrichtung oder dergleichen zum Erreichen der Schaltpositionen im Normalbetrieb als auch im Notbetrieb koppelbar bzw. gekoppelt ist.

Demzufolge kann die elektromechanische Aktorik ohne sonst erforderlichen konstruktiven Mehraufwand funktionell erweitert werden, in der Weise, dass über die Aktorik nicht nur in der Normalfunktion bzw. im Normalbetrieb, sondern auch in einer Notfunktion bzw. im Notbetrieb mehrere Positionen, jedoch zumindest zwei, durch eine lineare Bewegung mit definierter Kraft angefahren werden können.

Als Übertragungsvorrichtung zum Umwandeln einer durch den elektrischen Antrieb bzw. über den Energiespeicher erzeugten Drehbewegung in eine Linearbewegung ist gemäß der vorliegenden Erfindung ein Exzenter vorgesehen, der mit einem die Linearbewegung ausführenden Bauteil in Wirkverbindung steht. Hierbei sind verschiedene konstruktive Ausgestaltungen denkbar. Eine konstruktiv und Bauraum besonders günstige Ausführung ist hierbei gemäß der vorliegenden Erfindung, dass eine Exzenterscheibe mit einem exzentrisch angeordneten Stift vorgesehen ist, der mit einem die lineare Bewegung ausführenden Bauteil zum Beispiel einem Schieber oder dergleichen in Wirkverbindung steht. Durch die Drehbewegung des elektrischen Antriebes oder des Energiespeichers ist es nun möglich, mehrere Schaltpositionen nacheinander ohne eine Änderung der Drehbewegung hintereinander anzufahren. Demzufolge wird durch die Verwendung des Exzenters als Übertragungsvorrichtung die rotatorische Bewegung des Elektromotors bzw. des Getriebes in eine Linear- bzw. Axialbewegung des Schiebers umgesetzt. Durch den außermittig vorgesehenen Stift bzw. Pin auf der Exzenterscheibe wird bezogen auf die Getriebeübersetzung Bauraum eingespart, so dass quasi ohne Bauraummehraufwand eine Funktionserweiterung realisierbar ist. Die erfindungsgemäß vorgeschlagene elektromechanische Aktorik ist überall dort einzusetzen, wo eine Aktuierung zum Erreichen von Schaltpositionen oder dergleichen erforderlich ist. Ein besonders vorteilhafter Einsatzbereich ergibt sich bei Parksperrenanordnungen in Automatikgetrieben von Fahrzeugen. Hierbei wird die vorgeschlagene Aktorik zum Einlegen und Auslegen der Parksperrenanordnung verwendet. Somit wird durch die Aktorik sowohl im Normalbetrieb als auch im Notbetrieb ein Parksperrenrad der Parksperrenanordnung gesperrt oder freigegeben.

Nachfolgend wird die vorliegende Erfindung anhand der Zeichnungen weiter erläutert. Es zeigen:
Figur 1 eine schematische Seitenansicht einer beispielhaft dargestellten Ausführungsvariante einer erfindungsgemäßen elektromechanischen Aktorik zum Erreichen von zumindest zwei Schaltpositionen;
Figur 2 eine schematische Draufsicht auf die elektromechanische Aktorik gemäß Figur 1;
Figur 3 eine schematische Ansicht der elektromechanischen Aktorik im Notbetrieb zum Notauslegen in einer ersten Schaltposition als Ausgangslage;
Figur 4 eine schematische Ansicht der Aktorik bei der Betätigung zum Bewegen des Aktuators zur zweite Schaltposition;
Figur 5 eine schematische Ansicht der Aktorik in der zweiten Schaltposition als zweite Endlage;
Figur 6 eine schematische Ansicht der elektromechanischen Aktorik im Notbetrieb zum Noteinlegen in einer zweiten Schaltposition als Ausgangslage;
Figur 7 eine schematische Ansicht der Aktorik bei der Betätigung zum Bewegen des Aktuators zur ersten Schaltposition; und
Figur 8 eine schematische Ansicht der Aktorik in der ersten Schaltposition als erste Endlage.

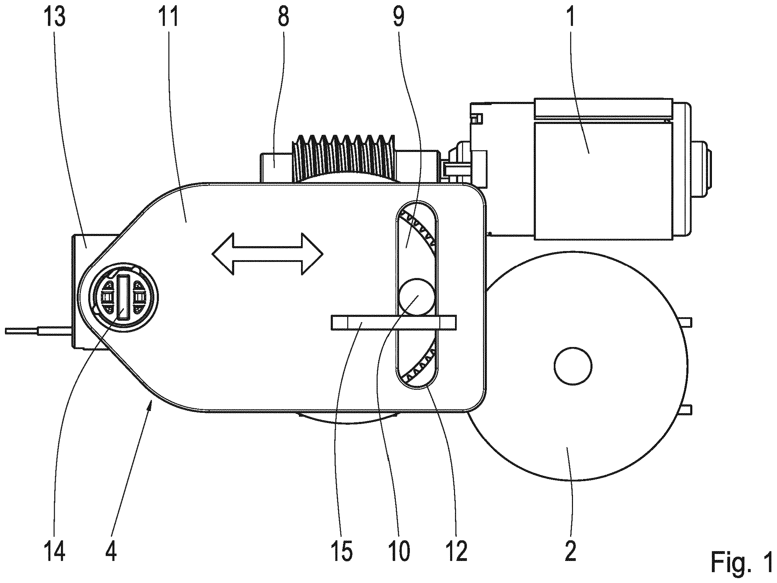

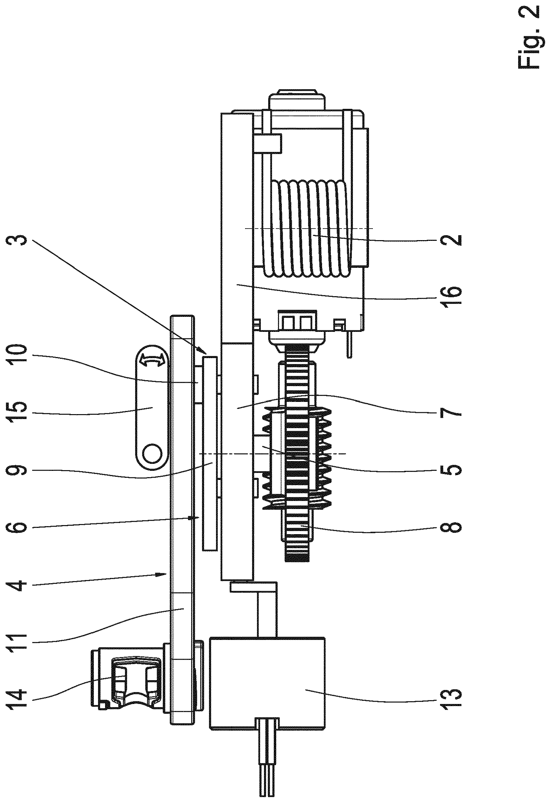

In den Figuren 1 bis 8 ist eine mögliche Ausführungsvariante einer erfindungsgemäßen elektromechanischen Aktorik zum Erreichen bzw. Anfahren von zumindest zwei Schaltpositionen exemplarisch dargestellt.

Die vorgeschlagene elektromechanische Aktorik umfasst einen elektrischen Antrieb 1 beispielsweise als Elektromotor oder dergleichen, für den Normalbetrieb und einen Energiespeicher 2, zum Beispiel ein elektrischer oder mechanischer Energiespeicher, für den Notbetrieb. Sowohl der elektrische Antrieb 1 als auch der Energiespeicher 2 sind mit einem Umlaufrädergetriebe gekoppelt, welches bei der gezeigten Ausführungsvariante als Planetengetriebe bzw. Planetenradsatz 3 ausgeführt ist.

Das Umlaufrädergetriebe bzw. das Planetengetriebe 3 ist mit einer eine Drehbewegung in eine Linearbewegung bzw. Translationsbewegung oder Axialbewegung umwandelnden Übertragungsvorrichtung 4 zum Erreichen der Schaltpositionen im Normalbetrieb und im Notbetrieb gekoppelt.

Im Einzelnen ist vorgesehen, dass der elektrische Antrieb 1 mit einem ersten Element des Planetengetriebes 3 gekoppelt ist. Ein zweites Element des Planetengetriebes 3 ist mit der Übertragungsvorrichtung 4 gekoppelt, während ein drittes Element des Planetengetriebes 3 mit dem Energiespeicher 2 gekoppelt ist. Bei der beispielhaft dargestellten Ausführungsvariante ist vorgesehen, das als erstes Element des Planetengetriebes 3 ein Sonnenrad 5, als zweites Element des Planetengetriebes 3 ein Planetenradträger 6 und als drittes Element ein Hohlrad 7 vorgesehen sind.

Bei der erfindungsgemäßen elektromechanischen Aktorik ist vorgesehen, dass im Normalbetrieb der elektrische Antrieb 1 über das erste Element bzw. das Sonnenrad 5 des Planetengetriebes 3 und der Abtrieb zum Erreichen der zumindest zwei Schaltpositionen über das zweite Element bzw. über den Planetenradträger 6 des Planetengetriebes 3 bei blockiertem dritten Element bzw. blockiertem Hohlrad 7 des Planetengetriebes 3 erfolgt. Demgegenüber erfolgt im Notbetrieb der Antrieb über das dritte Element bzw. das Hohlrad 7 des Planetengetriebes 3, wobei der Antrieb über den Energiespeicher 2 vorgesehen ist und der Abtrieb zum Erreichen der zumindest zwei Schaltpositionen erfolgt über das zweite Element bzw. über den Planetenradträger 6 bei blockiertem ersten Element bzw. bei blockierten Sonnenrad 5 des Planetengetriebes 3.

Das Sonnenrad 6 ist über ein Schneckengetriebe 8 mit dem elektrischen Antrieb 1 verbunden, wobei der Planetenradträger 6 des Planetengetriebes 3 bei der gezeigten Ausführung Teil der Übertragungsvorrichtung 4 ist, wobei die an dem Planetenradträger 6 gelagerten Planetenräder mit dem Hohlrad 7 des Planetengetriebes 6 kämmen, wobei das Hohlrad 7 mit dem Energiespeicher 2 in Wirkverbindung steht.

Bei der beispielhaft dargestellten Ausführungsvariante ist als Übertragungsvorrichtung 4 eine Exzenterscheibe 9 mit einem exzentrisch befestigten Stift 10 vorgesehen, wobei der Stift 10 mit einem linear bewegbaren Schieber 11 der Übertragungsvorrichtung 4 in Wirkverbindung steht. Auf diese Weise wird die von dem Planetengetriebe 3 erzeugte Drehbewegung in eine Linearbewegung bzw. Translationsbewegung des Schiebers 11 zum Erreichen der Schaltpositionen umgewandelt. Hierzu ist der Stift 10 in einer senkrecht zu der Linearbewegung des Schiebers 11 ausgerichteten Ausnehmung 12 zum Umwandeln der Rotationsbewegung in die Linearbewegung des Schiebers 11 sowohl im Normalbetrieb als auch im Notbetrieb geführt.

Bei der hier gezeigten Ausführungsvariante ist somit der Planetenradträger 6 quasi als Exzenterscheibe 9 ausgeführt, sodass diese beiden Bauteile ein gemeinsames Bauteil bilden. Es ist jedoch auch denkbar, dass separate Bauteile vorgesehen werden.

Die Funktionsweise der erfindungsgemäßen Aktorik wird anhand der Anwendung bei einer Parksparrenanordnung eines automatischen Fahrzeuggetriebes beschrieben, bei der die Aktorik zum Sperren und Freigeben eines Parksperrenrades im Normalbetrieb und im Notbetrieb eingesetzt wird, wobei die Übertragungsvorrichtung 4 mit dem Parksperrenrad in Wirkverbindung steht.

In der Normalfunktion bzw. im Normalbetrieb der Aktorik treibt der elektrische Antrieb bzw. der E-Motor 1 über ein Schneckengetriebe 8 das Sonnenrad 5 des Planetengetriebes 3 an. Das Schneckengetriebe 8 wird benötigt, um eine Selbsthemmung zu realisieren. Im weiteren Verlauf der Normalfunktion treibt das Sonnenrad 5 über die Planetenräder des Planetengetriebes 3 den als Exzenterscheibe 9 ausgeführte Planetenradträger 6 an. Somit rotiert die Exzenterscheibe 9, um die Mittelachse des Planetengetriebes 3, wobei der außermittige bzw. exzentrische Stift 10, der in der Ausnehmung 12 des Schiebers 11 bewegt wird, um die Drehbewegung in eine Axialbewegung des Schiebers 11 umzuwandeln.

Für die Normalfunktion bzw. den Normalbetrieb muss das Hohlrad 7 des Planetengetriebes blockiert werden, welches über einen als Sperrelement 13 ausgeführten Notaktuator erfolgt, der das Hohlrad 7 des Planetengetriebes 3 entweder blockiert oder freigibt. Durch die an dem Schieber 11 vorgesehene Ausnehmung bzw. Längsnut, in der der Stift 10 an der Exzenterscheibe 9 geführt ist, wird die axiale Bewegung umgewandelt. Es ist ohne weiteres möglich, dass neben den zumindest zwei vorgesehenen Schaltpositionen auch weitere Zwischenpositionen durch die beispielsweise mit dem Parksperrenrad oder mit anderen zu aktivierenden Bauteilen verbundene Aktorik angefahren werden können.

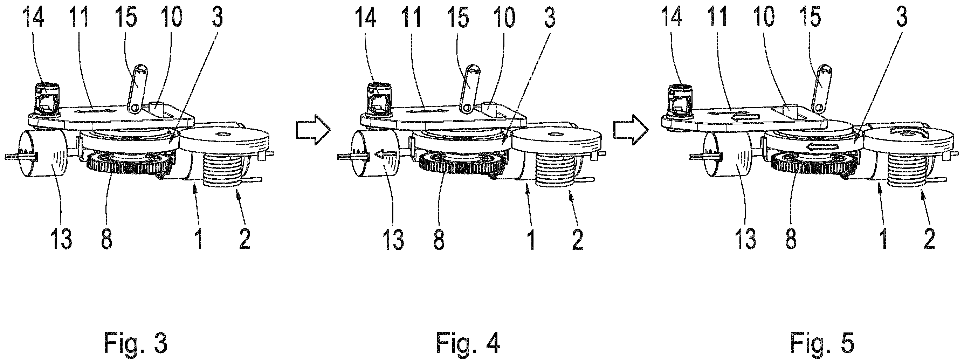

Mit der vorgeschlagenen Aktorik wird eine Notfunktion realisiert, die es ermöglicht, die Parksperre bzw. das Parksperrenrad zu betätigen, auch wenn der Normalbetrieb defekt oder deaktiviert ist. Dies bedeutet, dass der elektrische Antrieb 1 nicht mehr angesteuert werden kann. Die Betätigung bzw. Freischaltung des Notbetriebes erfolgt über das zum Beispiel als Sperrmagnet ausgeführte Sperrelement 13 oder durch eine manuelle Handbetätigung. Je nachdem, in welcher Position sich der Schieber 11 befindet, wird durch die Freischaltung des Hohlrades 7 der Energiespeicher 2, zum Beispiel ein Federspeicher oder dergleichen freigegeben, wodurch das Hohlrad 7 angetrieben wird und aufgrund der Selbsthemmung des Sonnenrades 5 durch das Schneckengetriebe 8, wird auch die Exzenterscheibe 9 über die Planetenräder angetrieben. Die Exzenterscheibe 9 wird nun um einen vorbestimmten Winkel in der Darstellung der Figuren 3 bis 8 um 180° bewegt, wodurch das System bzw. die Aktorik in die erste Scheinposition und die zweite Schaltposition bewegt wird. Die beiden Schaltposition bzw. die beiden Endlagen können aufgrund der gleichen Drehrichtung mit nur einem Energiespeicher 2 hintereinander angefahren werden. Die einheitliche Drehrichtung ist durch die Gestaltung der Exzenterscheibe 9 der Übertragungsvorrichtung 4 gegeben.

Mit der erfindungsgemäßen Aktorik können die beiden Schaltpositionen hintereinander sowohl im Normalbetrieb als auch im Notbetrieb angefahren werden, wobei vorzugsweise unterschiedliche Drehrichtungen beim Normalbetrieb und beim Notbetrieb vorgesehen sind.

In den Figuren 3 bis 5 ist die Funktion Notauslegen des Parksperrenrades, welches nicht weiter dargestellt ist, gezeigt. In Figur 3 ist eine Betätigungsaufnahme 14 zum Betätigen des Parksperrenrades bzw. zum Übertragen der Linearbewegung auf das Parksperrenrad oder auf ein anderes zu betätigendes Bauteil. Die Aktorik befindet sich in einer ersten Schaltposition, die in der Zeichnungsebene rechts liegt und somit die rechte Endlage bildet. In Figur 4 ist die beginnende Betätigung der Parksperre gezeigt, bei der das Sonnenrad 5 über das Schneckengetriebe 8 blockiert ist. Figur 5 zeigt das Ende des Notauslegens des Parksperrenrades, wobei durch den Energiespeicher 2 die Exzenterscheibe9 in Rotation versetzt wird und damit der Schieber 11 in der Zeichnungsebene nach links in die zweite Schaltposition bzw. in die linke Endlage bewegt wird. Dadurch wird das Parksperrenrad mithilfe der an dem Schieber 11 befestigten Betätigungsaufnahme 14 ausgelegt.

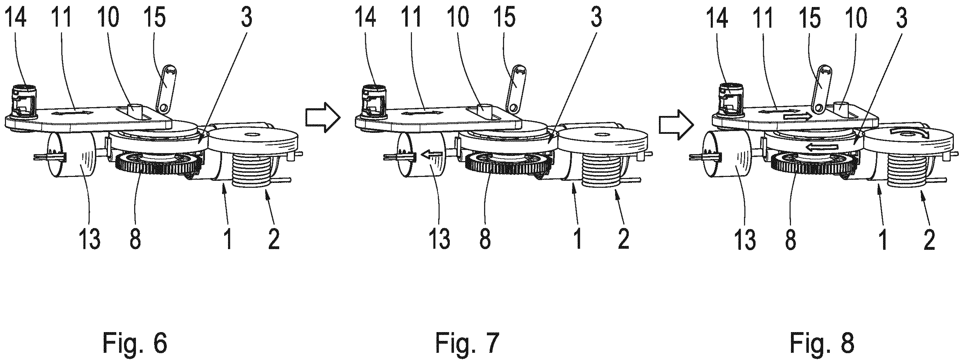

In den Figuren 6 bis 8 ist der Notbetrieb anhand der Funktion Noteinlegen des Parksperrenrades beschrieben bzw. dargestellt. Figur 6 zeigt den Schieber 11 mit der Betätigungsaufnahme 14 in der linken Endlage bzw. in der zweiten Schaltposition. Durch das nach wie vor blockierte Sonnenrad 5 wird durch die weitere Drehbewegung der Exzenterscheibe 9 mithilfe des Energiespeichers 2 das Noteinlegen begonnen, welches in Figur 7 dargestellt. Figur 8 zeigt das Ende des Noteinlegens des Parksperrenrades, wobei der Schieber 11 mit der Aufnahme 14 in die erste Schaltposition bzw. in die rechte Endlage bewegt wird.

Nachdem der Notbetrieb bzw. die Notfunktion aktiviert wurde, muss beispielsweise ein elektrischer Energiespeicher 2 aufgeladen werden oder ein mechanischer Energiespeicher 2 wieder gespannt werden. Dies kann beispielsweise dadurch erfolgen, dass der Planetenradträger 6 bzw. die Exzenterscheibe 9 blockiert wird, umso über den elektrischen Antrieb 1 das Hohlrad 7 zu drehen und den als Federspeicher ausgebildeten Energiespeicher 2 zurückzusetzen bzw. zu spannen. Vorzugsweise sind das Hohlrad 7 und der Energiespeicher 2 über eine Zahnradübersetzung 16 miteinander verbunden bzw. stehen miteinander in Wirkverbindung. Hierbei darf das Sperrelement 13 das Hohlrad 7 nicht blockieren. Das Sperrelement 13 kann hierzu beispielsweise aktiviert oder das Hohlrad 7 kann über einen Freilauf verfügen. Eine Blockierung der Exzenterscheibe 9 kann mechanisch über einen Schalter erfolgen oder über eine direkte Anbindung mit dem Sperrelement 13.

An dem Schieber 11 ist im Bereich der Ausnehmung 12 ein Blockierhebel 15 vorgesehen, mit dem die Bewegung des Stiftes 10 der Exzenterscheibe 9 in der länglichen Ausnehmung 12 begrenzt werden kann. Zum einen dient der Blockierhebel 15 zum Spannen des Energiespeichers 2 und zum anderen dient der Blockierhebel 15 dazu, dass das Erreichen der ersten Schaltposition und der zweiten Schaltposition ein Wiederdurchlaufen der ersten Schaltposition und der zweiten Schaltposition verhindert wird.

### Bezugszeichen

- 1: Elektrischer Antrieb
- 2: Energiespeicher
- 3: Umlaufrädergetriebe bzw. Planetengetriebe
- 4: Übertragungsvorrichtung
- 5: Sonnenrad
- 6: Planetenradträger
- 7: Hohlrad
- 8: Schneckengetriebe
- 9: Exzenterscheibe
- 10: Stift bzw. Pin
- 11: Schieber
- 12: Ausnehmung bzw. Längsnut
- 13: Sperrelement bzw. Sperrmagnet
- 14: Betätigungsaufnahme
- 15: Blockierhebel

## Patentansprüche

1. Elektromechanische Aktorik zum Erreichen von zumindest zwei Schaltpositionen, mit einem elektrischen Antrieb (1) für den Normalbetrieb und einem Energiespeicher (2) für den Notbetrieb, welche mit einem Umlaufrädergetriebe (3) gekoppelt sind, **dadurch gekennzeichnet, dass** das Umlaufrädergetriebe (3) mit einer eine Drehbewegung in eine Linearbewegung umwandelnden Übertragungsvorrichtung (4) zum Erreichen der Schaltpositionen im Normalbetrieb und im Notbetrieb gekoppelt ist, wobei als Umlaufrädergetriebe (3) ein Planetengetriebe vorgesehen ist, wobei der elektrische Antrieb (1) mit einem ersten Element des Planetengetriebes gekoppelt ist, wobei ein zweites Element des Planetengetriebes mit der Übertragungsvorrichtung (4) gekoppelt ist und wobei ein drittes Element des Planetengetriebes mit dem Energiespeicher (2) gekoppelt ist,
wobei als erstes Element des Planetengetriebes ein Sonnenrad (5) über ein Schneckengetriebe (8) mit dem elektrischen Antrieb (1) verbunden ist, als zweites Element des Planetengetriebes ein Planetenradträger (6) vorgesehen ist, welcher als separates Bauteil oder als Teil der Übertragungsvorrichtung (4) ausgeführt ist, und die an dem Planetenradträger (6) gelagerten Planetenräder mit dem als drittes Element des Planetengetriebes ausgeführten Hohlrad (7) kämmen, welches mit dem Energiespeicher (2) in Wirkverbindung steht,
wobei die Übertragungsvorrichtung (4) eine Exzenterscheibe (9) mit einem exzentrisch befestigten Stift (10) umfasst, wobei der Stift (10) mit einem linear bewegbaren Schieber (11) der Übertragungsvorrichtung (4) in Wirkverbindung steht, **dadurch gekennzeichnet, dass** der Stift (10) in einer senkrecht zu der Linearbewegung des Schiebers (11) ausgerichteten Ausnehmung (12) zum Umwandeln der Rotationsbewegung der Exzenterscheibe (9) in eine Linearbewegung des Schiebers (11) zum Erreichen der zumindest zwei Schaltpositionen sowohl im Normalbetrieb als auch im Notbetrieb geführt ist.

2. Elektromechanische Aktorik nach Anspruch 1, **dadurch gekennzeichnet, dass** im Normalbetrieb der Antrieb über das erste Element des Planetengetriebes und der Abtrieb zum Erreichen der zumindest zwei Schaltpositionen über das zweite Element des Planetengetriebes bei blockiertem dritten Element des Planetengetriebes vorgesehen ist, und dass im Notbetrieb der Antrieb über das dritte Element des Planetengetriebes und der Abtrieb zum Erreichen der zumindest zwei Schaltpositionen über das zweite Element bei blockiertem ersten Element des Planetengetriebes vorgesehen ist.

3. Elektromechanische Aktorik nach einem der vorangehenden Ansprüche, **dadurch gekennzeichnet, dass** bei einem mechanischen Energiespeicher (2) das dritte Element des Planetengetriebes über eine Zahnradübersetzung (16) mit dem als Federspeicher ausgeführten Energiespeicher (2) zum mechanischen Spannen des Federspeichers in Wirkverbindung steht.

4. Elektromechanische Aktorik nach einem der vorangehenden Ansprüche, **dadurch gekennzeichnet, dass** zum Sperren und Freigeben des Notbetriebes als Notaktuator ein Sperrelement (13) vorgesehen ist, welches das dritte Element des Planetengetriebes blockiert oder freigibt.

5. Elektromechanische Aktorik nach einem der vorangehenden Ansprüche, **dadurch gekennzeichnet, dass** die Bewegung des Stiftes (10) in der Ausnehmung (12) des Schiebers (11) durch einen Blockierhebel begrenzbar ist.

6. Elektromechanische Aktorik nach einem der vorangehenden Ansprüche, **dadurch gekennzeichnet, dass** die Aktorik bei einem Parksperrenrad einem automatischen Fahrzeuggetriebe zum Sperren und Freigeben im Normalbetrieb und im Notbetrieb einsetzbar ist, wobei die Übertragungsvorrichtung (4) mit dem Parksperrenrad in Wirkverbindung steht.

## Claims

1. Electromechanical actuation system for reaching at least two switching positions, having an electric drive (1) for normal operation and an energy store (2) for emergency operation, which are coupled to an epicyclic gear mechanism (3), **characterized in that** the epicyclic gear mechanism (3) is coupled to a transmission device (4), which converts rotational motion into linear motion, for reaching the switching positions in normal operation and in emergency operation, wherein a planetary gear mechanism is provided as the epicyclic gear mechanism (3), wherein the electric drive (1) is coupled to a first element of the planetary gear mechanism, wherein a second element of the planetary gear mechanism is coupled to the transmission device (4) and wherein a third element of the planetary gear mechanism is coupled to the energy store (2),
wherein, as the first element of the planetary gear mechanism, a sun gear (5) is connected to the electric drive (1) via a worm gear mechanism (8), a planetary gear carrier (6) which is designed as a separate component or as part of the transmission device (4) is provided as the second element of the planetary gear mechanism, and the planetary gears which are mounted on the planetary gear carrier (6) mesh with the ring gear (7) which is designed as the third element of the planetary gear mechanism and is operatively connected to the energy store (2), wherein the transmission device (4) comprises an eccentric disc (9) with an eccentrically secured pin (10), wherein the pin (10) is operatively connected to a linearly movable slide (11) of the transmission device (4),
**characterized in that** the pin (10) is guided in a recess (12), which is oriented perpendicularly to the linear motion of the slide (11), for converting the rotational motion of the eccentric disc (9) into a linear motion of the slide (11) for reaching the at least two switching positions both during normal operation and during emergency operation.

2. Electromechanical actuation system according to Claim 1, **characterized in that**, during normal operation, the drive is provided via the first element of the planetary gear mechanism and the output for reaching the at least two switching positions is provided via the second element of the planetary gear mechanism with the third element of the planetary gear mechanism blocked, and **in that**, during emergency operation, the drive is provided via the third element of the planetary gear mechanism and the output for reaching the at least two switching positions is provided via the second element with the first element of the planetary gear mechanism blocked.

3. Electromechanical actuation system according to either of the preceding claims, **characterized in that**, given a mechanical energy store (2), the third element of the planetary gear mechanism is operatively connected via a gear wheel transmission (16) to the energy store (2), which is designed as a spring energy store, for mechanically tensioning the spring energy store.

4. Electromechanical actuation system according to one of the preceding claims, **characterized in that** a locking element (13), which blocks or releases the third element of the planetary gear mechanism, is provided as an emergency actuator for stopping and enabling emergency operation.

5. Electromechanical actuation system according to one of the preceding claims, **characterized in that** the movement of the pin (10) in the recess (12) of the slide (11) can be limited by a blocking lever.

6. Electromechanical actuation system according to one of the preceding claims, **characterized in that** the actuation system can be used in a parking lock gear in an automatic vehicle gear mechanism for locking and release purposes during normal operation and during emergency operation, wherein the transmission device (4) is operatively connected to the parking lock gear.

## Revendications

1. Système d'actionnement électromécanique permettant d'atteindre au moins deux positions de commutation, comprenant un entraînement électrique (1) pour le fonctionnement normal et un accumulateur d'énergie (2) pour le fonctionnement de secours, qui sont couplés à un train épicycloïdal (3), **caractérisé en ce que** le train épicycloïdal (3) est couplé à un dispositif de transmission (4) convertissant un mouvement rotatif en un mouvement linéaire pour atteindre les positions de commutation en fonctionnement normal et en fonctionnement de secours, dans lequel, comme train épicycloïdal (3), un engrenage planétaire est prévu, l'entraînement électrique (1) étant couplé à un premier élément de l'engrenage planétaire, un deuxième élément de l'engrenage planétaire étant couplé au dispositif de transmission (4), et un troisième élément de l'engrenage planétaire étant couplé à l'accumulateur d'énergie (2),
dans lequel, comme premier élément de l'engrenage planétaire, une roue solaire (5) est reliée à l'entraînement électrique (1) par une vis sans fin (8), comme deuxième élément de l'engrenage planétaire, un porte-satellites (6) est prévu qui est réalisé sous la forme d'un composant séparé ou comme faisant partie du dispositif de transmission (4), et les roues planétaires montées sur le porte-satellites (6) s'engrenant avec la couronne (7) réalisée comme le troisième élément de l'engrenage planétaire et qui est en liaison active avec l'accumulateur d'énergie (2),
le dispositif de transmission (4) comprenant un disque d'excentrique (9) doté d'une broche (10) fixée de manière excentrique, la broche (10) étant en liaison active avec un coulisseau (11), pouvant être déplacé linéairement, du dispositif de transmission (4),
**caractérisé en ce que** la broche (10) est guidée dans un évidement (12) orienté perpendiculairement au mouvement linéaire du coulisseau (11) pour convertir le mouvement de rotation du disque d'excentrique (9) en un mouvement linéaire du coulisseau (11) pour atteindre les au moins deux positions de commutation à la fois en fonctionnement normal et en fonctionnement de secours.

2. Système d'actionnement électromécanique selon la revendication 1, **caractérisé en ce qu'**en fonctionnement normal, l'entrée d'entraînement est prévue par le premier élément de l'engrenage planétaire et la sortie d'entraînement pour atteindre les au moins deux positions de commutation est prévue par le deuxième élément de l'engrenage planétaire lorsque le troisième élément de l'engrenage planétaire est bloqué, et **en ce qu'**en fonctionnement de secours, l'entrée d'entraînement est prévue par le troisième élément de l'engrenage planétaire et la sortie d'entraînement pour atteindre les au moins deux positions de commutation est prévue par le deuxième élément lorsque le premier élément de l'engrenage planétaire est bloqué.

3. Système d'actionnement électromécanique selon l'une quelconque des revendications précédentes, **caractérisé en ce que** pour un accumulateur d'énergie mécanique (2), le troisième élément de l'engrenage planétaire est en liaison active par une transmission à engrenages (16) avec l'accumulateur d'énergie (2) réalisé sous la forme d'un accumulateur à ressort pour le bandage mécanique de l'accumulateur à ressort.

4. Système d'actionnement électromécanique selon l'une quelconque des revendications précédentes, **caractérisé en ce que** pour verrouiller et libérer le fonctionnement de secours, un élément de verrouillage (13) est prévu comme actionneur de secours qui bloque ou libère le troisième élément de l'engrenage planétaire.

5. Système d'actionnement électromécanique selon l'une quelconque des revendications précédentes, **caractérisé en ce que** le mouvement de la broche (10) dans l'évidement (12) du coulisseau (11) peut être limité par un levier de blocage.

6. Système d'actionnement électromécanique selon l'une quelconque des revendications précédentes, **caractérisé en ce que** le système d'actionnement peut être mis en œuvre sur une roue de verrouillage de stationnement d'une transmission automatique de véhicule pour le verrouillage et la libération en fonctionnement normal et en fonctionnement de secours, le dispositif de transmission (4) étant en liaison active avec la roue de verrouillage de stationnement.
